Europäisches Patentamt

European Patent Office

Office européen des brevets

(19)

(11) **EP 0 681 190 B1**

(12) **FASCICULE DE BREVET EUROPEEN**

(45) Date de publication et mention
de la délivrance du brevet:
**06.06.2001 Bulletin 2001/23**

(51) Int Cl.⁷: **G01S 13/24**

(21) Numéro de dépôt: **95400928.8**

(22) Date de dépôt: **25.04.1995**

(54) **Procédé de détection radar discrète et système de mise en oeuvre**

System und Verfahren zur diskreten Radarerkennung

Method and systemfor discrete radar detection

(84) Etats contractants désignés:
**DE FR GB IT**

(30) Priorité: **02.05.1994 FR 9405318**

(43) Date de publication de la demande:
**08.11.1995 Bulletin 1995/45**

(73) Titulaire: **THOMSON-CSF**
**75008 Paris (FR)**

(72) Inventeurs:
• **Carrara, Bruno**
**F-92402 Courbevoie Cedex (FR)**
• **Pecot, Michel**
**F-92402 Courbevoie Cedex (FR)**
• **Tourtier, Philippe**
**F-92402 Courbevoie Cedex (FR)**

(74) Mandataire: **Chaverneff, Vladimir et al**
**Thomson-CSF Propriété Intellectuelle,**
**13, Avenue du Président Salvador Allende**
**94117 Arcueil Cédex (FR)**

(56) Documents cités:
**US-A- 4 041 489**       **US-A- 4 450 444**
**US-A- 4 622 555**       **US-A- 4 851 848**
**US-A- 5 113 193**

• **PATENT ABSTRACTS OF JAPAN vol. 13 no. 57 (P-825) ,9 Février 1989 & JP-A-63 247682 (TECH. RES. & DEV. INST. OF JAPAN DEF. AGENCY) 14 Octobre 1988,**
• **I.E.E. PROCEEDINGS, vol. 133-F, no. 7, Décembre 1986 pages 649-657, GRIFFITHS ET AL. 'TELEVISION-BASED BISTATIC RADAR'**

## Description

La présente invention se rapporte à un procédé de détection radar discrète ainsi qu'à un système de mise en oeuvre de ce procédé.

Les systèmes radar multistatiques présentent de nombreux avantages, notamment en ce qui concerne :

- la discrétion des stations de réception, qui sont entièrement passives, et donc pratiquement invulnérables aux moyens de guerre électronique ;
- la possibilité de détection des cibles qui, du fait qu'elles sont vues sous des présentations différentes de celles qu'elles présentent pour des radars monostatiques classiques, ont des difficultés à assurer leur discrétion.
- la capacité de fonctionnement en environnement de fouillis et la possibilité de mise en oeuvre de formes d'ondes à haute fréquence de répétition.

Toutefois, ces systèmes nécessitent l'implantation d'un réseau de stations, ce qui les rend onéreux.

On a donc été amené à essayer d'utiliser des stations déjà implantées et normalement prévues pour une autre utilisation, mais pouvant être facilement adaptées à une utilisation en radar. Il a ainsi été proposé (H.D. GRIFFITHS, N.R.W LONG, "Television based bistatic radar", IEE proceedings, vol 133, n°7, Dec. 1986), d'utiliser des stations de diffusion de signaux de télévision analogiques de type PAL, SECAM ou NTSC pour détecter des cibles aériennes, ce qui s'est révélé difficile à mettre en oeuvre. Les auteurs de l'article précité ont alors proposé l'utilisation de formes d'ondes inspirées des émissions impulsionnelles classiques des radars. Cependant, cette approche est limitée par les contraintes de fonctionnement des émetteurs de télédiffusion, qui ne sont pas compatibles avec des signaux impulsionnels tels que ceux des radars classiques.

On connaît d'après les documents US-A-4 450 444 et US-A-4 041 489 des radars multiporteuses, mais ces radars ne répondent pas au critère de discrétion défini ci-dessus, et leur procédé de fonctionnement n'est pas compatible avec un réseau non prévu à cet effet, tel qu'un réseau de télévision.

La présente invention a pour objet un procédé et un système de détection radar discrète utilisant de préférence un réseau existant de stations d'émission et de réception, ce réseau étant suffisamment dense pour assurer une couverture radar satisfaisante de la zone géographique surveillée compte tenu de la puissance d'émission en utilisation radar que peuvent assurer les stations d'émission, les modifications apportées au réseau existant étant le plus simples possible à mettre en oeuvre, tout en permettant de réaliser un système multistatique présentant des performances similaires à celles des systèmes multistatiques classiques. Dans le cas où l'on crée un réseau, celui-ci doit être le moins onéreux possible, tout en offrant une bonne couverture radar de la zone à surveiller et une bonne discrétion. Dans le cas de l'application à un radar monostatique, celui-ci doit pouvoir assurer une détection radar aussi bonne qu'un radar classique, avec une discrétion améliorée.

Le procédé conforme à l'invention est un procédé de détection radar à station(s) de réception entièrement passive(s), consistant à émettre un signal multiporteuse répété sur au moins N périodes (N ≥ 1), et à effectuer à la réception un filtrage adapté, tel que défini dans la revendication 1.

N est de préférence supérieur à dix, et peut être égal à 1 pour un radar monostatique. N détermine la sélectivité Doppler.

Le système de détection radar conforme à l'invention est un système de détection radar comportant au moins un émetteur et un récepteur, le(s) récepteur(s) étant entièrement passif(s), tel que défini dans la revendication 7.

L'invention sera mieux comprise à la lecture de la description détaillée d'un mode de réalisation, pris à titre d'exemple non limitatif et illustré par le dessin annexé, sur lequel :

- La figure 1 est un exemple de schéma de propagation de signal entre émetteur et récepteur du système conforme à l'invention ;
- La figure 2 est un exemple simplifié de forme d'onde dans le domaine fréquentiel produite par les émetteurs du système conforme à l'invention ;
- La figure 3 est un schéma simplifié de la partie traitement en distance et Doppler d'un récepteur conforme à l'invention ;
- La figure 4 est un schéma simplifié des circuits de prétraitement de synchronisation d'un récepteur conforme à l'invention ;
- La figure 5 est un bloc-diagramme de la voie de synchronisation d'un récepteur conforme à l'invention ;
- La figure 6 est un bloc-diagramme des circuits d'avertissement numérique des oscillateurs locaux d'un récepteur conforme à l'invention ; les dispositifs représentés aux figures 4 à 6 ne concernant que le cas d'un système multistatique.
- La figure 7 est un bloc-diagramme de l'ensemble des circuits principaux de traitement d'un récepteur conforme à l'invention ; et

-   La figure 8 est un bloc-diagramme d'une variante de réalisation des circuits de la figure 3.

L'invention est décrite ci-dessous en référence à l'utilisation d'un réseau existant de diffusion de signaux de télévision, mais il est bien entendu qu'elle n'est pas limitée à cette seule utilisation. Elle s'étend également à l'utilisation d'un réseau existant (faisceaux hertziens par exemple) au moins partiellement compatible avec l'émission et la réception de signaux de type télévision numérique, tels que décrits ci-dessous, ainsi qu'à l'utilisation combinée d'un réseau existant et d'émetteurs et/ou récepteurs additionnels, au cas où le réseau existant ne serait pas assez dense, et même à la réalisation d'un réseau spécifique multistatique ou d'un radar monostatique. Dans la description qui suit, on emploie le terme bistatique pour des exemples, mais il est bien entendu que ces exemples peuvent être étendus à un système multistatique.

Des études récentes dans le domaine des transmissions numériques par voie hertzienne ont mis en évidence tout l'intérêt des modulations multiporteuses dans des situations de trajets multiples (échos). Dans l'approche classique monoporteuse, chaque information élémentaire transmise occupe l'ensemble de la bande spectrale disponible, sur un intervalle de temps minimal. A l'opposé, l'approche multiporteuse OFDM (Orthogonal Frequency Division Multiplexing) alloue à chaque information élémentaire une petite partie de la bande de fréquence utile sur un intervalle de temps plus important.

En présence d'un canal sélectif en fréquence - comme c'est le cas dans une situation de trajets multiples - cette dernière solution autorise une identification et une compensation de la réponse du canal (en d'autres termes des échos) plus performantes et faciles de mise en oeuvre par transformée de Fourier rapide (FFT).

Or c'est précisément les échos issus d'éventuelles cibles que le récepteur radar doit détecter. On comprend dès lors l'intérêt potentiel d'une telle forme d'onde. Un autre avantage de cette solution est de pouvoir faire fonctionner les émetteurs en continu, c'est à dire avec des rendements en puissance bien meilleurs que dans le cas des radars impulsionnels.

La forme d'onde utilisée est définie à partir de la somme pondérée de M porteuses orthogonales (séparées fréquentiellement de $\Delta f$):

$$s(t) = \sum_{k=0}^{M-1} c_k . e^{2\pi j k \Delta f t}$$

Les coefficients de pondération $c_k$ sont des nombres complexes. Contrairement au cas de la transmission numérique où ces coefficients portent l'information à transmettre sur des durées $T_m = 1/\Delta f$, ils sont choisis fixes sur N périodes $T_m$ successives, conformément à l'invention, de manière à conférer au signal résultant de bonnes propriétés radar.

L'utilisation des coefficients $c_k$ invariants d'un paquet (c'est l'ensemble des M porteuses produites pendant une période) à l'autre permet d'assurer la stationnarité du signal émis qui devient périodique de période $T_m$, ce qui permet d'envisager en réception un traitement classique par filtrage adapté sur un temps d'intégration de N périodes.

Dans une configuration bistatique, un tel filtrage adapté permet l'estimation de la distance différentielle D (différence entre la somme des distances émetteur-cible et récepteur-cible et la distance émetteur-récepteur), ainsi que la vitesse apparente bistatique v (somme algébrique des vitesses radiales cible vers émetteur et cible vers récepteur). Dans une configuration monostatique, on obtient les valeurs de distance et de vitesse radiales de façon analogue à celle mise en oeuvre dans des radars classiques. L'intégration cohérente sur N périodes du signal reçu est nécessaire d'une part afin d'augmenter le bilan énergétique, d'autre part pour obtenir la discrimination souhaitée sur l'axe Doppler. Cette durée d'intégration est toutefois limitée par les caractéristiques de fluctuation temporelle de la SER (Surface Equivalente Radar) des cibles, et par leur vitesse maximale. Cette dernière contrainte équivaut à une hypothèse de bande étroite du signal reçu, ce qui revient à considérer que le Doppler affecte de la même manière chacune des sous-porteuses, ou, en d'autres termes, que la variation de distance de la cible pendant la durée d'intégration reste petite vis à vis de la résolution en distance du récepteur. Elle se traduit par :

$$N \langle\langle c/Mv$$

où c représente la vitesse de la lumière et v la vitesse apparente de la cible.

Après modulation par la porteuse *HF* de fréquence $f_0$, le signal émis s'écrit:

$$e(t) = \text{Re}(\alpha_0 . s(t) . e^{2\pi j f_0 t})$$

où $\alpha_0$ est un réel positif déterminant la puissance moyenne $P_e$ émise :

$$\alpha_0{}^2 = P_e/M$$

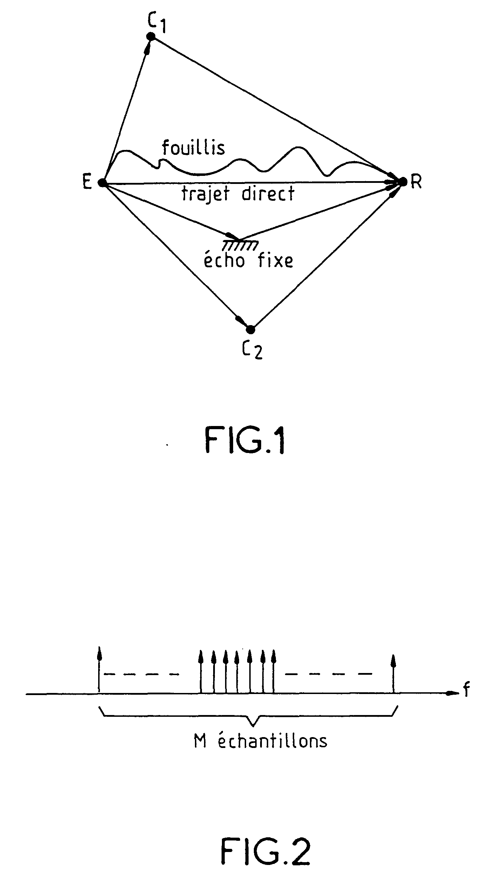

Le signal reçu au niveau du récepteur est constitué de la somme de diverses contributions résumées figure 1, à savoir :

- cibles mobiles ($C_1$, $C_2$)
- trajet direct (en fait, trajet stationnaire minimal)
- échos fixes (réflexions sur structures fixes du relief)
- fouillis de sol
- bruit d'antenne + bruit propre du récepteur ramené à l'entrée.

Sous la condition bande étroite exprimée plus haut, le signal reçu d'une cible sur une durée $N.T_m$ s'exprime, après démodulation par la porteuse $f_0$, sous la forme :

$$z(t) = \alpha.s(t - t_0 - \tau).e^{-2\pi j f_0(\tau+t_0)}.e^{2\pi j f_0(t-t_0)}.\Pi_{NT_m}{}^{(t-t_0-\tau)}$$

où $\Pi_{NT_m}(t)$ est la fonction caractéristique de l'intervalle $[0,NT_m]$ et $t_0$ est un paramètre inconnu mais constant quel que soit le trajet (cible, trajet direct, écho fixe...) traduisant simplement la délocalisation entre émetteur et récepteur. En monostatique, $t_0$ est nul.

$f_d$ et $\tau$ représentent les caractéristiques de la cible, respectivement son Doppler apparent et son retard différentiel : $f_d = f_0.v/c$ et $\tau=D/c$.

Sous l'hypothèse de bruit blanc gaussien, le récepteur optimal (c'est-à-dire celui qui maximise le rapport signal à bruit à sa sortie) est celui qui effectue la corrélation (sur $N.T_m$) du signal reçu échantillonné à la fréquence $f_e = M.\Delta f$ avec :

$$U_{km}(t) = s(t - \tau_k).e^{2\pi j f_m t}$$

pour des couples ($\tau_k\ f_m$) échantillonnant l'espace distance-Doppler ; prend ensuite le module du résultat et recherche les maxima obtenus après CFAR, ces maxima traduisant la présence d'une ou plusieurs cibles.

Les valeurs des ambiguïtés de réception s'en déduisent immédiatement :

- Distance ambiguë :       $D_a = cT_m = c/\Delta f$
- Vitesse ambiguë :       $V_a = c\Delta f/f_0$

De même, un échantillonnage régulier de l'espace distance/Doppler compatible avec les précisions d'estimation atteignables peut être choisi selon :

- Largeur de la case distance :       $D_p = cT_m / M$ (soit M cases distance)
- Largeur de la case Doppler :       $V_p = c\Delta f / Nf_0$ (soit N cases Doppler)

Les couples ($\tau_k\ f_m$) sont donc donnés par :

- $\tau_k =k.T_m/M$, k variant de 0 à M-1
- $f_m = m.\Delta f / N$, m variant de 0 à N-1

Les coefficients $c_k$ doivent quant à eux être choisis de façon à optimiser le compromis entre la largeur du lobe principal et les niveaux des lobes secondaires de la fonction d'ambiguïté.

On montre alors, moyennant une hypothèse sur le Doppler des cibles. $f_d \langle\langle \Delta f$, que le récepteur optimal doit calculer (hors normalisation) :

$$c(k,m) = \sum_{p=0}^{M-1} e^{2\pi j k_{p/M}} \cdot C_p^* \sum_{l=0}^{M-1} e^{-2\pi j l_{p/M}} \sum_{n=0}^{N-1} Z_{l,n} e^{-2\pi j m n/N}$$

pour k variant de 0 à M-1 (indice distance) et m de 0 à N-1 (indice Doppler),où

$$z_{ln} = z((l + nM).T_e)$$

est un échantillonnage du signal reçu.

L'hypothèse $f_d \lll \Delta f$ est relativement contraignante. Lorsqu'elle n'est pas vraiment vérifiée (cibles à grande vitesse), on voit apparaître un couplage distance/Doppler et une remontée des lobes secondaires d'ambiguïté.

On a représenté en figure 2 une forme d'onde pouvant être utilisée par le système de l'invention dans le domaine fréquentiel. Cette forme d'onde comprend M (par exemple M=512) porteuses régulièrement espacées entre elles, ces M porteuses étant orthogonales.

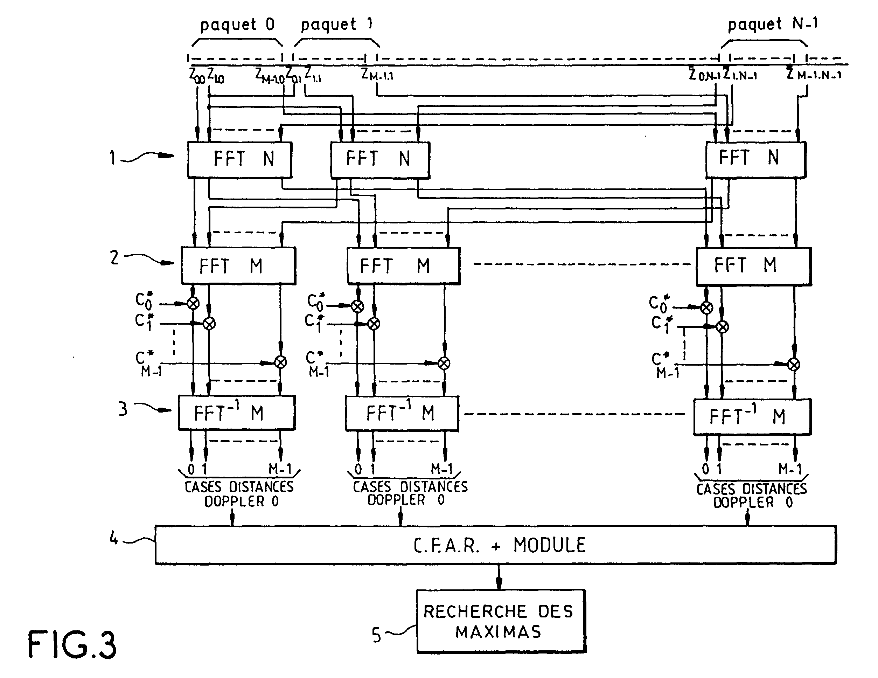

On a représenté en figure 3 la partie traitement des cases distances et Doppler d'un récepteur conforme à l'invention. Le signal reçu par le récepteur est échantillonné de façon connue en soi par des circuits non représentés. Cet échantillonnage se fait avec une période de $T_e = T_m/M$ avec des intervalles de durée $NT_m$ (puisque l'on a NM échantillons pour N périodes d'un signal comprenant M échantillons).

On regroupe les échantillons obtenus par indices de rang dans la forme d'onde, c'est-à-dire par cases distances. On obtient ainsi M groupes de N échantillons chacun. Chacun de ces M groupes est envoyé à un circuit correspondant de FFT d'un premier étage 1 qui comporte M tels circuits de FFT fonctionnant en parallèle. La FFT est réalisée sur N points dans chacun de ces circuits, et effectue un traitement Doppler.

On regroupe les échantillons de sortie de l'étage 1 selon leur appartenance à l'une des N cases Doppler. On obtient ainsi N groupes de M échantillons. Chacun de ces N groupes est envoyé à un circuit correspondant de FFT de l'étage de traitement 2 suivant. Les N circuits de l'étage 2 réalisent chacun une FFT sur M points. Les différentes sorties de chacun des circuits de l'étage 2 sont multipliées par $c_k^*$(k allant de 0 à M-1), les coefficients $c_k^*$ étant ceux définis ci-dessus. Les sorties ainsi pondérées des circuits de l'étage 2 sont envoyées en parallèle à des circuits de FFT inverse d'un étage 3. Ces circuits de l'étage 3 réalisent chacun une FFT inverse sur M points pour chacun des N paquets issus de l'étage 2. On effectue ainsi un traitement de distance.

Les sorties des N circuits de l'étage 3 sont reliées à un étage 4 de détermination de module et de régulation de fausses alarmes (CFAR) lui-même relié à un étage 5 de recherche de maxima (pic le plus puissant après corrélation des différentes cases Doppler).

A titre d'exemple, pour 512 porteuses, une intégration sur 512 paquets, une bande totale de 1,5 MHz et une porteuse HF à 600 MHz, les caractéristiques du récepteur deviennent :

$D_a = 100$ km      $D_p = 200$ m
$V_a = 1500$ m/s      $V_p = 3$ m/s

Dans ces conditions, une cible de SER unité située à 20 km de l'émetteur et du récepteur peut être détectée avec un rapport signal à bruit en sortie de traitement de l'ordre de 15 dB pour une puissance d'émission d'e 50 W seulement (en supposant une température totale de bruit de 1700°K).

Ce récepteur nécessite auparavant une synchronisation. En bistatique, elle s'effectue sur le train binaire reçu sur le trajet direct (entre l'émetteur et le récepteur), afin de procéder ensuite à un traitement en retard différentiel, comme décrit ci-dessous. En monostatique, cette synchronisation s'obtient naturellement grâce aux circuits internes du radar.

Le défaut de la forme d'onde multiporteuse décrite ci-dessus est que, si l'on maîtrise parfaitement son spectre, sa dynamique est par contre importante. Afin d'éviter toute distorsion d'intermodulation entre porteuses voisines en sortie d'émetteur (écrêtage au niveau de l'amplification), il est donc nécessaire de placer son point de fonctionnement en recul (backoff) par rapport à sa puissance nominale dans un rapport égal au rapport de la puissance crête à la puissance moyenne du signal OFDM. Ce backoff se traduit par une réduction de la puissance moyenne émise.

La valeur de ce backoff peut être limitée par un choix judicieux des coefficients $c_k$. Typiquement, dans le cas de coefficients de module unité et à phases indépendantes uniformément distribuées sur $[-\pi, +\pi]$, un backoff de l'ordre de 8 dB est généralement nécessaire.

Le récepteur décrit précédemment permet la mesure de retards sans référence absolue étant donné l'absence de synchronisation entre émetteur et récepteur. Ceci se traduit par un retard supplémentaire $t_0$ inconnu mais constant sur chacune des contributions du signal reçu (trajet direct et trajets cibles).

Afin d'obtenir une référence absolue en bistatique ou en multistatique, il est donc nécessaire d'inclure avant le récepteur proprement dit (figure 3) un module de synchronisation sur le trajet direct, c'est-à-dire de recaler le train binaire par rapport au retard inconnu $t_0$. Le récepteur mesure alors des retards différentiels par rapport au retard du trajet direct, supposé connu (par calibration).

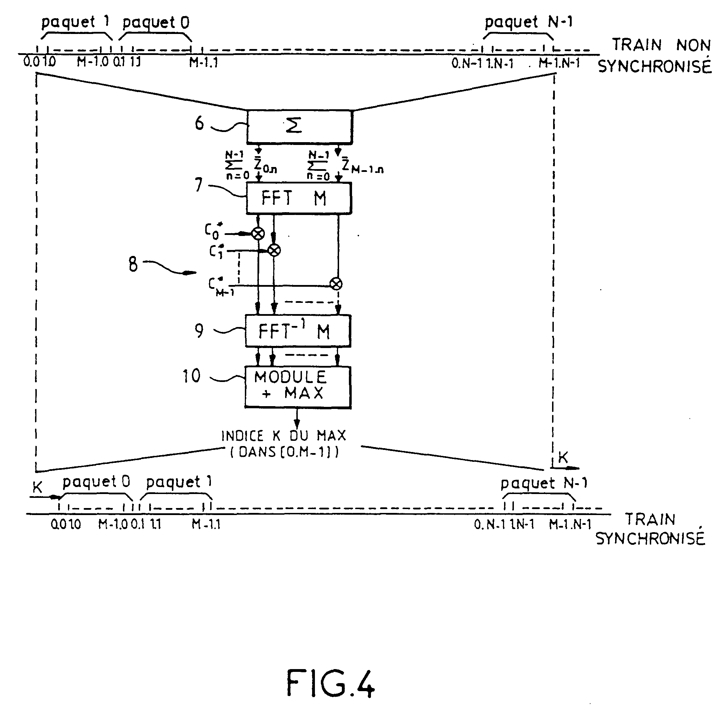

Cette synchronisation peut être obtenue simplement en supposant que le trajet direct correspond au pic ayant le plus de puissance après corrélation dans la case à Doppler nul. Elle peut alors être effectuée à l'aide de circuits numériques comme représenté sur le schéma de la figure 4. Il faut noter que cette étape de synchronisation n'a pas besoin d'être effectuée avant chaque traitement de N paquets (ce qui réduit la charge de calcul du récepteur).

Dans la suite, on appellera voie réception le traitement de la figure 3 et voie synchronisation le traitement de la figure 4 (dans le schéma global de réception, ces deux traitements se séparent en effet sur deux voies distinctes).

Le dispositif de la figure 4 reçoit à son entrée les N groupes de M échantillons avant traitement et regroupement. Tous ces groupes sont rassemblés dans un circuit 6 de sommation qui ne laisse passer que la composante à Doppler nul sur tous les échantillons, et qui est relié à un circuit 7 opérant une FFT sur M points. Les différentes sorties du circuit 7 sont multipliées en 8 par les coefficients $c_k^*$ correspondants (k allant de 0 à M-1), puis soumises à une FFT inverse sur M points en 9. Un circuit 10 effectue l'extraction du module des sorties du circuit 9 et la recherche du pic de puissance maximale après corrélation dans la case à Doppler nul, comme précisé ci-dessus. On obtient ainsi la valeur de l'indice k de ce pic (k pouvant aller de 0 à M-1, comme précisé ci-dessus).On en déduit le signal de synchronisation des paquets reçus.

Une seconde contrainte d'implantation est liée à la dynamique des signaux à traiter. En effet, les traitements décrits précédemment se font en numérique ; ils supposent donc un échantillonnage et une conversion analogique/numérique préalables des signaux reçus après démodulation HF. Se pose donc le problème de la dynamique de conversion. Le récepteur doit en effet être capable de traiter aussi bien le trajet direct (en bistatique, ou la "fuite d'émission", c'est-à-dire la liaison parasite directe entre émetteur et récepteur d'une station monostatique, sans sortir de la station émettrice-réceptrice) que le signal rétrodiffusé par une cible (voie réception). Or, une différence de puissance de 95 dB peut exister entre ces deux signaux, nécessitant donc a priori une dynamique de conversion numérique d'au moins 16 bits. Par ailleurs (sur la voie réception), afin d'éviter que le trajet direct ou la fuite d'émission ne viennent créer des fausses alarmes en sortie des filtres Doppler à vitesses non nulles (du fait de sa puissance très élevée), il est nécessaire de les ramener d'abord par filtrage à un niveau comparable à celui des signaux issus des cibles. Une solution simple consiste alors à retirer aux échantillons reçus la valeur moyenne obtenue en sortie du traitement Doppler à vitesse nulle. Il est nécessaire d'effectuer cette soustraction en analogique afin de réduire la dynamique de conversion sur la voie réception.

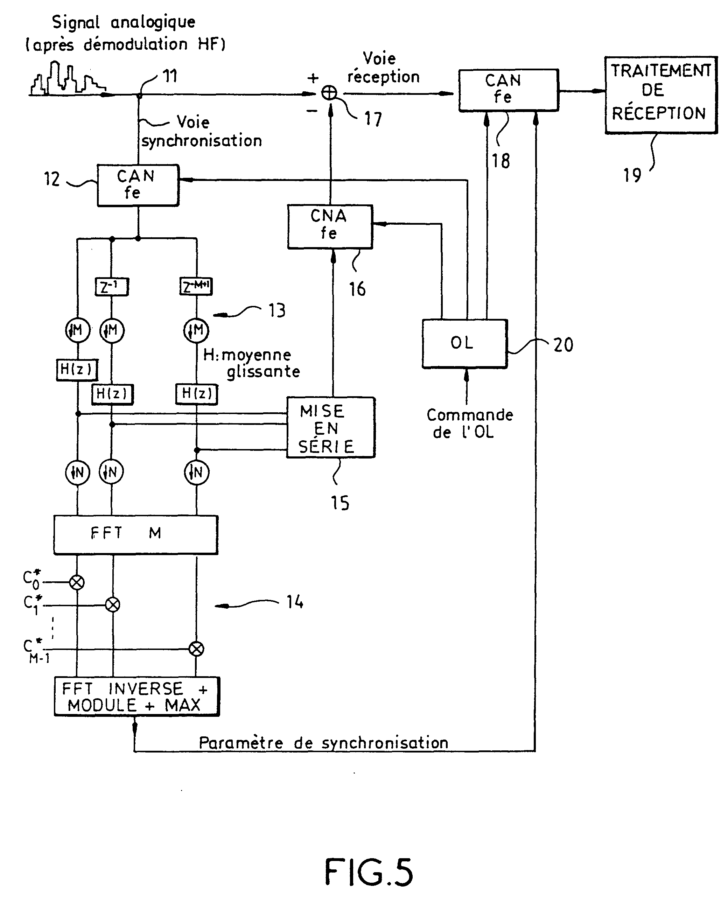

La figure 5 représente une solution possible pour la réalisation de ce module amont de synchronisation et filtrage de trajet direct, qui permet de réduire la dynamique de la voie réception (traitement des signaux cibles) à une valeur convenable de 8 ou 12 bits. Le filtre H(z) effectue une moyenne glissante qui permet de ne conserver que le trajet direct en éliminant les cibles à Doppler non nul.

Cette solution a d'autre part l'avantage de bien séparer en bistatique ou en multistatique la voie synchronisation (travaillant uniquement sur le trajet direct) de la voie de traitement (voie réception). Cette voie synchronisation est par ailleurs utilisée pour asservir numériquement l'oscillateur local du récepteur sur celui de l'émetteur.

La figure 5 donne le synoptique global de la voie synchronisation (hors dispositif d'asservissement de l'oscillateur, qui n'est pas représenté). On retrouve sur cette figure la partie synchronisation de la réalisation bistatique, correspondant à la figure 4 (FFT M points, multiplication par les coefficients $c_k$, FFT inverse). La seule différence pour cette partie synchronisation réside dans le calcul de la moyenne glissante sur la figure 5, via les filtres H(z).

Le bloc-diagramme de la figure 5 représente des circuits d'une partie d'un récepteur conforme à l'invention. L'entrée 11 de ces circuits reçoit des signaux analogiques après démodulation HF dans le récepteur dans lequel ils sont implantés. Cette entrée 11 est reliée par un convertisseur analogique-numérique 12 à un circuit 13 de calcul de moyenne glissante, qui est suivi d'un circuit 14 de prétraitement de synchronisation qui est celui de la figure 4. Le circuit 13 est réalisé de façon connue en soi en reliant à chacune des sorties du circuit 12 un filtre H(z). Les sorties des différents filtres H(z) sont reliées à un convertisseur parallèle-série 15 suivi d'un convertisseur numérique-analogique 16 dont la sortie est reliée à une entrée d'un additionneur 17 dont l'autre entrée est reliée à l'entrée 11. La sortie de l'additionneur 17 est reliée à un convertisseur analogique-numérique 18, qui est suivi d'un circuit de traitement 19, qui est le circuit de la figure 3. Un oscillateur local 20 est relié aux différents convertisseurs 12,16 et 18.

Pour réaliser en bistatique l'asservissement numérique de l'oscillateur local du récepteur, on se place toujours dans une configuration à un émetteur et un récepteur. La délocalisation entre émission et réception transparaît aussi au niveau de la génération des fréquences de pilotage du récepteur (oscillateurs de démodulation HF et d'échantillonnage), qu'il faut asservir sur l'émission pour conserver un traitement cohérent. Comme expliqué ci-dessous, une récupération numérique des horloges d'émission peut être mise en place par un traitement complémentaire sur la voie synchronisation.

En effet, en supposant des générations locales (à l'émission et à la réception) les fréquences de démodulation

$f'_0$ et d'échantillonnage $f'_e$ en réception sont différentes et ne dérivent pas de la même manière que celles de l'émission, $f_0$ et $f_e$. C'est cet écart que l'on doit chercher à compenser (Récupération de rythme), en asservissant les oscillateurs locaux du récepteur sur ceux de l'émetteur.

L'approche adoptée est une récupération numérique du rythme des horloges à partir signal reçu du trajet direct sur la voie synchronisation.

Soient, $\triangle f_0 = f'_0 - f_0$ et $\triangle f_e = f'_e - f_e$. Il faut chercher à estimer $\triangle f_0$ et $\triangle f_e$ qui rendent compte du mauvais calage des fréquences du récepteur, de façon à générer les commandes adéquates des oscillateurs locaux.

On peut alors montrer (les calculs simples mais relativement fastidieux ne sont pas reproduits ici) que la variation au cours du temps de la phase des coefficients $d_k$ obtenus en sortie de la FFT de la voie synchronisation (FFT M points des figures 4 ou 5, avant multiplication par les coefficients $c^*_k$) est une fonction linéaire des écarts $\triangle f_e$ et $\triangle f_0$ (moyennant l'hypothèse que les écarts sont faibles).

En d'autres termes, en notant :

$\Delta\Phi(k)$ = variation de phase du coefficient $d_k$ entre les FFT d'instants n et n+1.

on montre que :

$$\Delta\Phi(k) = a.k + b.\Delta f_e + c.\Delta f_0$$

les coefficients a, b et c étant des constantes connues. Dans ces conditions, un algorithme des moindres carrés appliqué sur ces différences de phase (pour k variant de 0 à M-1) permet d'estimer les écarts inconnus $\Delta f_0$ et $\Delta f_e$.

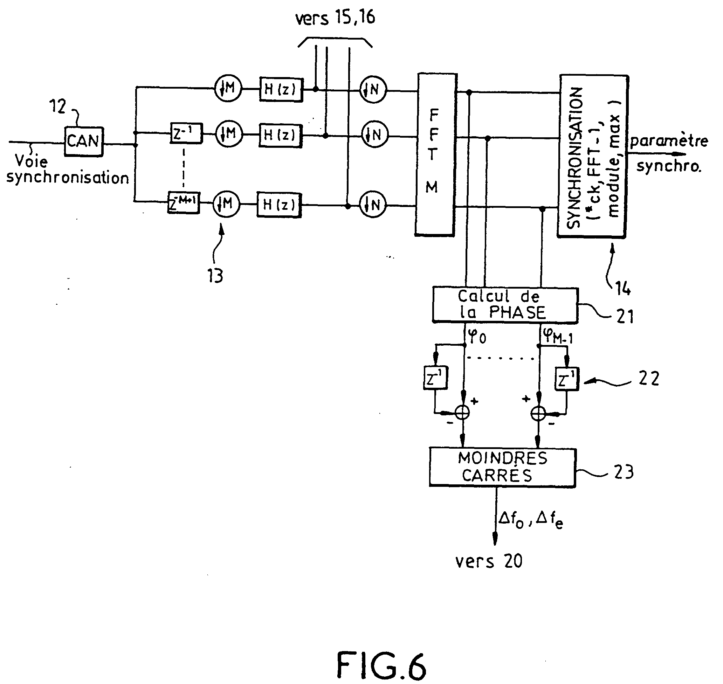

Cette procédure d'asservissement des fréquences de pilotage en bistatique est résumée sur la figure 6. Il faut noter que $\Delta f_0$ peut soit servir à commander l'oscillateur de génération de la fréquence de démodulation, soit être utilisée pour alimenter un multiplieur complexe sur le signal temporel avant traitement de réception (traitement distance et Doppler), l'oscillateur de démodulation étant alors laissé libre.

Sur la figure 6, on a représenté la voie de synchronisation de la figure 5, à savoir les circuits 12, 13 et 14. Les sorties du circuit de FFT du circuit 14 sont reliées à un circuit 21 de calcul de la phase des différents échantillons, suivi d'un étage 22 d'addition de la phase précédente et d'un étage 23 de calcul des moindres carrés dont la sortie commande l'oscillateur local (20 sur la figure 5).

Le système décrit précédemment doit in fine conduire à une localisation absolue des cibles, ce qui nécessite de pouvoir traiter, et donc discriminer au niveau d'un récepteur les signaux en provenance d'émetteurs différents. Une bonne discrimination peut être obtenue en utilisant des jeux de coefficients $c_k$ orthogonaux d'un émetteur à l'autre. Par exemple, en choisissant des coefficients $c_k$ de module unité, dont la phase est tirée aléatoirement et de façon indépendante d'un émetteur à l'autre, on atteint en réception, en l'absence de bruit, une réjection de 10 $\text{Log}_{10}(M)$ dB de l'émetteur indésirable, soit 27 dB pour 512 porteuses. Cette réjection est largement suffisante dans la mesure où un niveau de bruit de 19 dB en sortie de traitement suffit pour obtenir une probabilité de détection de 0,85 pour une probabilité de fausse alarme de $10^{-6}$.

De manière similaire, cette discrimination des coefficients $c_k$ d'émetteurs différents permet de focaliser les opérations de synchronisation et d'asservissement des oscillateurs locaux sur un émetteur particulier.

Dans le cas de l'utilisation d'un réseau existant d'émetteurs et de récepteurs (par exemple un réseau de télévision), le système radar multistatique obtenu est particulièrement adapté à la surveillance basse altitude d'engins volants, du fait de l'orientation des antennes d'un tel réseau.

Pour améliorer les performances du système radar de l'invention, on peut avantageusement faire varier au cours du temps les coefficients $c_k$ après un nombre entier de fois N périodes du signal émis. On peut ainsi s'affranchir des effets néfastes des différents parasites (fouillis, échos parasites, brouillage, ...).

De façon à rendre le système encore plus discret, on peut choisir les coefficients $c_k$ de façon que le signal émis ressemble à une image de télévision fixe ou mobile (une mire par exemple).

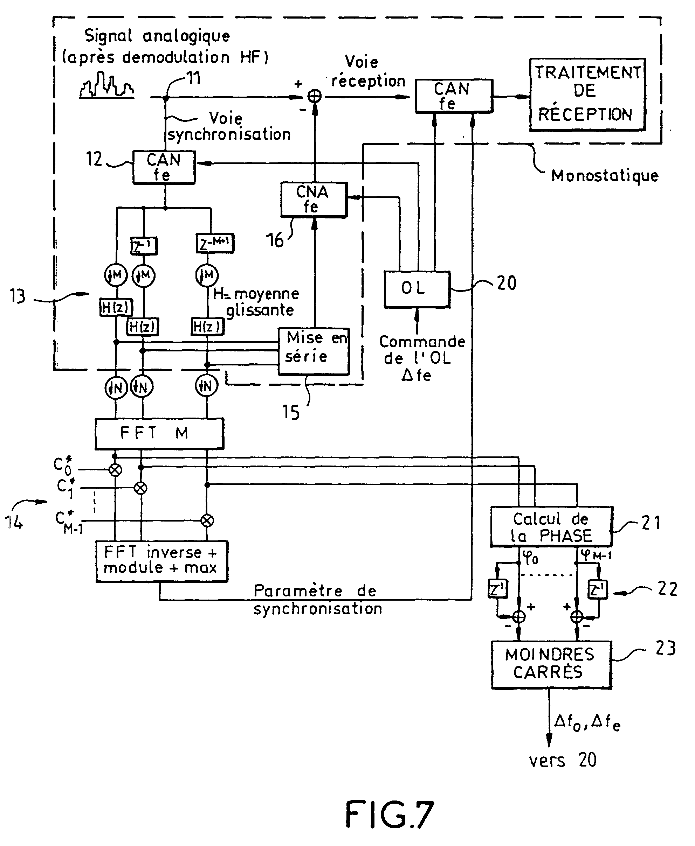

On a représenté en figure 7 le bloc-diagramme de la partie traitement de signaux OFDM du récepteur de l'invention. Ce bloc-diagramme comprend les sous-ensembles représentés sur les figures 3, 4, 5 et 6. Les éléments utilisés seulement pour une station monostatique sont entourés d'un cadre en trait interrompu.

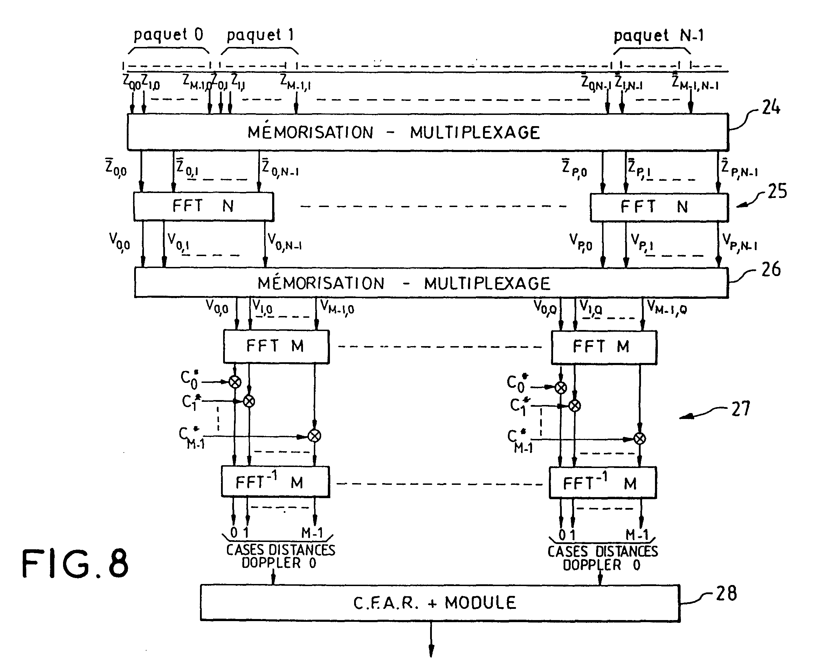

On a représenté en figure 8 un mode de réalisation avantageux d'une variante des circuits de la figure 3. Le signal reçu par le récepteur est échantillonné de la même façon que dans le cas de la figure 3. Les N paquets de M échantillons sont mémorisés dans un étage 24, puis multiplexés pour être envoyés à un étage 25 de P processeurs FFT mis en parallèle et traitant chacun M/P groupes, avec $1 \le P < M$. L'étage 25 est suivi d'un étage 26 de mémorisation de M groupes de N échantillons sortant des processeurs FFT, cet étage 26 assurant également le multiplexage de ces échantillons en N groupes de M échantillons, les échantillons d'un même groupe appartenant à la même case Doppler. L'étage 26 est suivi d'un étage 27 comprenant Q ensembles de traitement de cases distance, chacun de ces ensembles traitant N/Q cases Doppler, avec $1 \le Q \le N$. Comme dans le cas de la figure 3, chaque ensemble de traitement effectue d'abord une FFT sur les M échantillons de même Doppler, puis les différents échantillons sont multipliés par $c^*_k$ (k allant

de 0 à M-1), et sont soumis à une FFT inverse (FFT$^{-1}$). L'étage 27 est suivi d'un étage 28 de détermination de module et de CFAR, identique à l'étage 4 de la figure 3, et qui peut être suivi d'un étage de recherche de maxima, tel que l'étage 5.

Dans le dispositif récepteur décrit ci-dessus, on peut réduire le nombre de processeurs FFT en fonction de leur capacité de calcul élémentaire grâce à une mémorisation des signaux à traiter. De façon avantageuse, les opérations de mémorisation d'une part, et celles de FFT et FFT$^{-1}$ d'autre part, peuvent être réalisées successivement par les mêmes circuits physiques si leurs capacités de traitement sont compatibles avec le débit de données reçues par le récepteur.

## Revendications

1. Procédé de détection radar bi ou multistatique à station(s) de réception entièrement passive(s), consistant à émettre un signal multiporteuse répété sur au moins N périodes (N ≥ 1), et à effectuer à la réception un filtrage adapté, caractérisé par le fait que le signal multiporteuse est du type OFDM à porteuses orthogonales, et que la forme d'onde utilisée est définie à partir de la somme pondérée d'un paquet de M porteuses orthogonales de fréquences différentes produites pendant une période, les coefficients de pondération complexes étant fixes sur N périodes successives du signal émis.

2. Procédé selon la revendication 1, caractérisé par le fait qu'à la réception on effectue un traitement Doppler et un traitement distance des signaux reçus.

3. Procédé selon l'une des revendications précédentes pour un système bi ou multistatique, caractérisé par le fait que les trains de signaux reçus sont synchronisés sur le trajet direct entre l'émetteur et le récepteur.

4. Procédé selon l'une des revendications précédentes, caractérisé par le fait que le point de fonctionnement de l'émetteur est placé en recul par rapport à sa puissance nominale dans un rapport égal au rapport de la puissance crête à la puissance moyenne du signal OFDM.

5. Procédé selon l'une des revendications précédentes, caractérisé par le fait que l'on fait varier au cours du temps les coefficients de pondération après un nombre entier de fois N périodes du signal émis.

6. Procédé selon l'une des revendications précédentes, caractérisé par le fait que les coefficients de pondération sont choisis de façon que le signal émis ressemble à une image de télévision fixe ou mobile.

7. Système de détection radar bi ou multistatique comportant au moins un émetteur et un récepteur, le(s) récepteur(s) étant entièrement passif(s),
caractérisé par le fait que l'émetteur comporte un générateur d'onde codée multiporteuse de type OFDM à porteuses orthogonales, et que la forme d'onde utilisée est définie à partir de la somme pondérée d'un paquet de M porteuses orthogonales de fréquences différentes produites pendant une période, les coefficients de pondération complexes étant fixes sur N périodes successives du signal émis, le récepteur comportant un étage d'échantillonnage suivi d'au moins un étage de traitement de cases distances (2), les échantillons étant regroupés par indices de rang dans la forme d'onde, c'est-à-dire par cases distances.

8. Système de détection selon la revendication 7, caractérisé par le fait que le récepteur comporte en outre un étage de traitement de cases Doppler (2).

9. Système de détection selon la revendication 7 ou 8, pour une onde codée à M porteuses, pour un temps d'intégration de N périodes pendant lesquelles l'onde codée est invariante, caractérisé par le fait que l'étage de traitement de cases distances du récepteur comporte N circuits de FFT sur M points, que les sorties de ces circuits sont multipliées chacune par un coefficient de pondération, et que cet étage est suivi d'un étage de N circuits de FFT inverse sur M points (3).

10. Système de détection selon la revendication 9, caractérisé par le fait que l'étage de traitement de cases distances du récepteur est précédé d'un étage de traitement Doppler (1) comportant M circuits de FFT sur N points.

11. Système selon l'une des revendications 7 à 10, caractérisé par le fait que son récepteur comporte une voie de synchronisation (7 à 10) précédée d'un circuit (6) ne laissant passer que la composante à Doppler nul, cette voie de synchronisation comportant un circuit (7) de FFT, un circuit (8) de multiplication par des coefficients de pondération, un circuit (9) de FFT inverse et un circuit (10) d'extraction de module et de recherche de pic de puissance maximale.

12. Système de détection selon l'une des revendications 7 à 11 caractérisé par le fait que son récepteur comporte un circuit analogique de réduction de dynamique (12 à 18) relié entre la sortie du démodulateur HF et l'entrée des circuits de traitement de cases distances et/ou Doppler.

13. Système de détection selon la revendication 12 caractérisé par le fait que le circuit de réduction de dynamique comporte un convertisseur analogique-numérique (12), un circuit (13) de calcul de moyenne glissante, un circuit de prétraitement de synchronisation (14), un convertisseur parallèle-série (15) et un convertisseur numérique-analogique (16).

**Patentansprüche**

1. Verfahren zur bistatischen oder multistatischen Radarerfassung mit mindestens einer vollkommen passiven Empfangsstation, wobei das Verfahren darin besteht, ein Mehrträgersignal wiederholt über mindestens N Perioden (N≥1) auszusenden und beim Empfang eine angepaßte Filterung durchzuführen, dadurch gekennzeichnet, daß das Mehrträgersignal vom OFDM-Typ (OFDM Orthogonal Frequency Division Multiplexing) mit zueinander orthogonalen Trägern ist und daß die verwendete Wellenform ausgehend von der gewichteten Summe eines Pakets von M orthogonalen Trägern unterschiedlicher Frequenzen definiert wird, die während einer Periode erzeugt werden, und wobei die komplexen Gewichtungskoeffizienten über N aufeinanderfolgende Perioden des Sendesignals nicht verändert werden.

2. Verfahren nach Anspruch 1, dadurch gekennzeichnet, daß die Empfangssignale einer Dopplerverarbeitung und einer Entfernungsverarbeitung unterworfen werden.

3. Verfahren nach einem der vorstehenden Ansprüche für ein bistatisches oder multistatisches System, dadurch gekennzeichnet, daß die empfangenen Signalzüge auf dem direkten Übertragungsweg zwischen Sender und Empfänger synchronisiert werden.

4. Verfahren nach einem der vorstehenden Ansprüche, dadurch gekennzeichnet, daß der Arbeitspunkt des Senders bezüglich seiner Nennleistung in ein Verhältnis gleich dem Verhältnis der Spitzenleistung zur mittleren Leistung des OFDM-Signals zurückversetzt wird.

5. Verfahren nach einem der vorstehenden Ansprüche, dadurch gekennzeichnet, daß die Gewichtungskoeffizienten nach einem ganzzahligen Vielfachen von N Perioden des Sendesignals verändert werden.

6. Verfahren nach einem der vorstehenden Ansprüche, dadurch gekennzeichnet, daß die Gewichtungskoeffizienten so gewählt sind, daß das ausgesendete Signal einem unbewegten oder bewegten Fernsehbild ähnelt.

7. Bistatisches oder multistatisches Radar-erfassungssystem mit mindestens einem Sender und einem Empfänger, wobei der oder die Empfänger vollkommen passiv sind, dadurch gekennzeichnet, daß der Sender einen Generator für eine kodierte Mehrträgerwelle vom Typ OFDM mit orthogonalen Trägern besitzt und daß die verwendete Wellenform ausgehend von der gewichteten Summe eines Pakets von M orthogonalen Trägern unterschiedlicher Frequenzen definiert ist, die während einer Periode erzeugt werden, wobei die komplexen Gewichtungskoeffizienten über N aufeinanderfolgende Perioden des Sendesignals konstant bleiben und der Empfänger eine Tastungsstufe enthält, auf die mindestens eine Stufe zur Verarbeitung von Entfernungsfächern (2) folgt, und wobei die Tastung nach Rangindices in der Wellenform zusammengefaßt werden, d.h. nach Entfernungsfächern.

8. Erfassungssystem nach Anspruch 7, dadurch gekennzeichnet, daß der Empfänger außerdem eine Stufe (2) zur Verarbeitung von Dopplerfrequenzfächern enthält.

9. Erfassungssystem nach Anspruch 7 oder 8 für eine mit N Trägern kodierte Welle, für eine Integrationszeit von N Perioden, während denen die kodierte Welle nicht verändert wird, dadurch gekennzeichnet, daß die Stufe zur Verarbeitung von Entfernungsfächern des Empfängers N FFT-Schaltungen über M Punkte enthält, daß die Ausgangssignale dieser Schaltungen je mit einem Gewichtungskoeffizienten multipliziert werden und daß auf diese Stufe eine Stufe (3) mit N inversen FFT-Schaltungen über M Punkte folgt.

10. Erfassungssystem nach Anspruch 9, dadurch gekennzeichnet, daß der Verarbeitungsstufe für Entfernungsfächer des Empfängers eine Doppler-Verarbeitungsstufe (1) mit M FFT-Schaltungen über N Punkte vorausgeht.

11. System nach einem der Ansprüche 7 bis 10, dadurch gekennzeichnet, daß der Empfänger einen Synchronisationskanal (7 bis 10) besitzt, dem eine Schaltung (6) vorausgeht, die nur die Komponente mit dem Dopplerwert null durchläßt, und daß der Synchronisationskanal eine FFT-Schaltung (7), eine Schaltung (8) zur Multiplikation mit Gewichtungskoeffizienten, eine inverse FFT-Schaltung (9) und eine Schaltung (10) aufweist, in der der Modul entnommen und der maximale Leistungswert gesucht wird.

12. Erfassungssystem nach einem der Ansprüche 7 bis 11, dadurch gekennzeichnet, daß der Empfänger eine analoge Schaltung zur Verringerung der Dynamik (12 bis 18) aufweist, die zwischen den Ausgang des Hochfrequenzdemodulators und den Eingang der Schaltungen zur Verarbeitung von Entfernungs- und/oder Dopplerfächern eingefügt ist.

13. Erfassungssystem nach Anspruch 12, dadurch gekennzeichnet, daß die Schaltung zur Verminderung der Dynamik einen Analog/Digitalwandler (12), eine Schaltung (13) zur Berechnung eines gleitenden Mittelwerts, eine Schaltung (14) zur Vorverarbeitung der Synchronisation, einen Parallel/Serienwandler (15) und einen Digital/Analogwandler (16) enthält.

**Claims**

1. Process of bi or multistatic radar detection with entirely passive reception station(s) consisting in transmitting a multicarrier signal repeated over at least N periods (N ≥ 1), and in performing a matched filtering on reception, characterized in that the multicarrier signal is of the OFDM type with orthogonal carriers, and that the waveform used is defined on the basis of the weighted sum of a packet of M orthogonal carriers of different frequencies produced during a period, the complex weighting coefficients being fixed over N successive periods of the transmitted signal.

2. Process according to Claim 1, characterized in that a Doppler processing and a range processing of the signals received are performed on reception.

3. Process according to one of the preceding claims for a bi or multistatic system, characterized in that the trains of received signals are synchronized on the direct path between the transmitter and the receiver.

4. Process according to one of the preceding claims, characterized in that the operating point of the transmitter is backed off with respect to its nominal power in a ratio equal to the ratio of the peak power to the mean power of the OFDM signal.

5. Process according to one of the preceding claims, characterized in that the weighting coefficients are varied over time after an integer number of times N periods of the transmitted signal.

6. Process according to one of the preceding claims, characterized in that the weighting coefficients are chosen in such a way that the transmitted signal resembles a fixed or moving television image.

7. System for bi or multistatic radar detection comprising at least one transmitter and one receiver, the receiver(s) being entirely passive, characterized in that the transmitter comprises a generator of a multicarrier coded wave of OFDM type with orthogonal carriers, and that the waveform used is defined on the basis of the weighted sum of a packet of M orthogonal carriers of different frequencies produced during a period, the complex weighting coefficients being fixed over N successive periods of the transmitted signal, the receiver including a sampling stage followed by at least one stage for processing range bins (2), the samples being grouped by indices of rank in the waveform, that is to say by range bins.

8. Detection system according to Claim 7, characterized in that the receiver furthermore includes a stage for processing Doppler bins (2).

9.  Detection system according to Claim 7 or 8, for a coded wave with M carriers, for an integration time of N periods during which the coded wave is invariant, characterized in that the stage for processing range bins of the receiver includes N M-point FFT circuits, that the outputs of these circuits are each multiplied by a weighting coefficient, and that this stage is followed by a stage of N M-point inverse FFT circuits (3).

10. Detection system according to Claim 9, characterized in that the stage for processing range bins of the receiver is preceded by a Doppler processing stage (1) comprising M N-point FFT circuits.

11. System according to one of Claims 7 to 10, characterized in that its receiver includes a synchronization pathway (7 to 10) preceded by a circuit (6) allowing through only the zero Doppler component, this synchronization pathway including an FFT circuit (7), a circuit (8) for multiplying by weighting coefficients, an inverse FFT circuit (9) and a circuit (10) for modulus extraction and for searching for maximum power spike.

12. Detection system according to one of Claims 7 to 11, characterized in that its receiver includes an analogue circuit for reducing dynamic swing (12 to 18) linked between the output of the HF demodulator and the input of the range and/or Doppler bin processing circuits.

13. Detection system according to Claim 12, characterized in that the circuit for reducing dynamic swing includes an analogue/digital converter (12), a circuit (13) for calculating sliding average, a synchronization pre-processing circuit (14), a parallel/serial converter (15) and a digital/analogue converter (16).

FIG.1

FIG.2

FIG.3

FIG.4

EP 0 681 190 B1

Signal analogique
(après démodulation HF)

Voie réception

TRAITEMENT DE RÉCEPTION — 19

FIG.5

15

FIG.6

FIG.7

EP 0 681 190 B1

paquet 0   paquet 1                                          paquet N-1

$Z_{00}$ $Z_{1,0}$   $Z_{M-1,0}$ $Z_{0,1}$ $Z_{1,1}$   $Z_{M-1,1}$                    $Z_{0,N-1}$ $Z_{1,N-1}$   $Z_{M-1,N-1}$

| MÉMORISATION – MULTIPLEXAGE | 24 |

$\bar{Z}_{0,0}$   $\bar{Z}_{0,1}$ — — — $\bar{Z}_{0,N-1}$                    $\bar{Z}_{P,0}$   $\bar{Z}_{P,1}$ — — — $\bar{Z}_{P,N-1}$

| FFT N | — — — — — — — — — — — | FFT N | 25 |

$V_{0,0}$   $V_{0,1}$ — — — $V_{0,N-1}$                    $V_{P,0}$   $V_{P,1}$ — — — $V_{P,N-1}$

| MÉMORISATION – MULTIPLEXAGE | 26 |

$V_{0,0}$ $V_{1,0}$ — — $V_{M-1,0}$                    $V_{0,0}$ $V_{1,0}$ — — $V_{M-1,0}$

| FFT M | — — — — — — | FFT M |

$C_0^*$ →⊗   $C_0^*$ →⊗
$C_1^*$ →⊗   $C_1^*$ →⊗          27

$C_{M-1}^*$ →⊗   $C_{M-1}^*$ →⊗

| FFT$^{-1}$ M | — — — — — — — | FFT$^{-1}$ M |

0 1   M-1                    0 1   M-1
CASES DISTANCES                    CASES DISTANCES
DOPPLER 0                    DOPPLER 0

**FIG.8**

| C.F.A.R. + MODULE | 28 |